# EUROPÄISCHE PATENTANMELDUNG

(11) **EP 2 816 202 A1**
(43) Veröffentlichungstag der Anmeldung: **24.12.2014**
(21) Anmeldenummer: 13173148.1
(22) Anmeldetag: 21.06.2013
(51) Int. Cl.: F01K 23/10, F02K 3/10

(54) **Gas/Dampf-Kraftwerksanlage**

(71) Anmelder: Siemens Aktiengesellschaft, 80333 München (DE)
(72) Erfinder: Eisfeld, Tjark, Dr., 45478 Mülheim a. d. Ruhr (DE); Kunte, Robert, Dr., 40212 Düsseldorf (DE); Pieper, Norbert, 47178 Duisburg (DE)

(57) **Zusammenfassung**

Die Erfindung betrifft eine Vorrichtung zum Erhöhen der Abgastemperatur einer Gasturbine (1), wobei im Verbindungsbereich von Gasturbine (1) und Abhitzekessel Brenner (9) angebracht werden.

## Beschreibung

Die Erfindung betrifft eine Vorrichtung zum Erhöhen der Abgastemperatur einer Gasturbine, umfassend eine Gasturbine und einen Abhitzekessel.

Des Weiteren betrifft die Erfindung ein Verfahren zum Erhöhen der Abgastemperatur einer Gasturbine.

In der kommunalen Energieversorgung werden neben fossilen Kraftwerksanlagen, die mit Dampfturbinen betrieben werden, auch Gas- und Dampfturbinen-Kraftwerke (GuD) eingesetzt. Bei den vorgenannten Gas- und Dampfturbinen-Kraftwerken wird das heiße Abgas der Gasturbine dazu genutzt, um Dampf für den anschließenden Dampfprozess für die Dampfturbine zu erzeugen. Der Wirkungsgrad solcher Gas- und Dampfturbinenkraftwerke liegt bei ca. 60%.

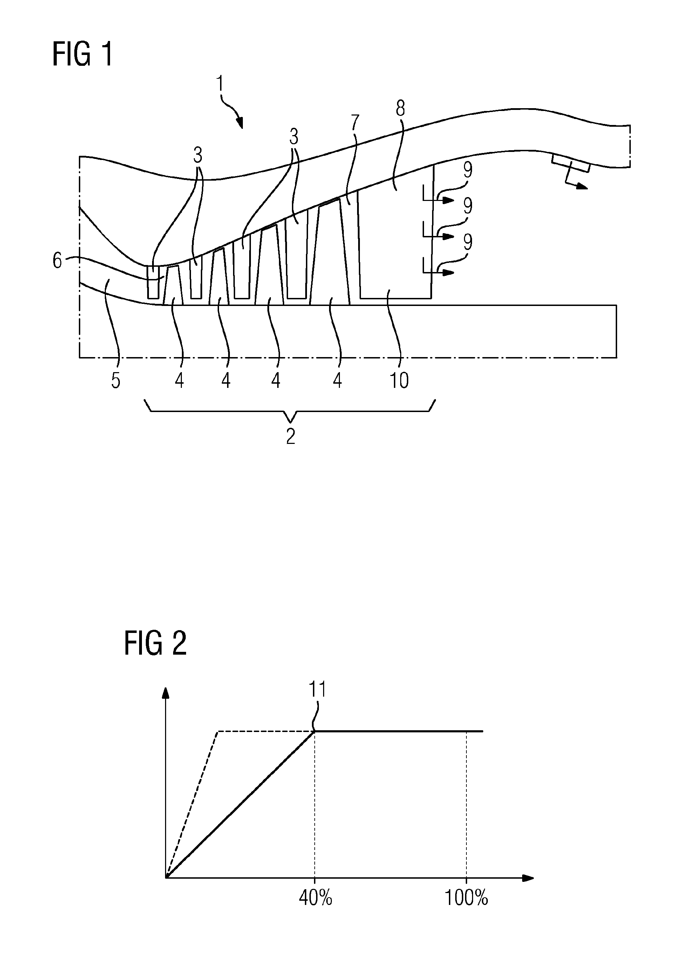

Neben der fossilen Energieerzeugung wird auch die Energieerzeugung mit erneuerbaren Energien wie z.B. der Windkraft oder der thermischen Energie eingesetzt. Dies führt dazu, dass der Strommarkt flexible Kraftwerke fordert, die über einen großen Lastbereich mit einem ausreichenden Lastgradienten betrieben werden können. Üblicherweise erfüllen Gas- und Dampfturbinenkraftwerke diese Forderung in einem Lastbereich von ca. 40% bis 100% Leistung. Unterhalb einer Leistung von ca. 50% fällt die Abgastemperatur der Gasturbine stark ab. Dieser Punkt wird IGV-Eckpunkt genannt und ist in der Figur 2 dargestellt. Die Figur 2 zeigt auf der X-Achse die Gasturbinenlast und auf der Y-Achse die Kesseleintrittstemperatur. Es ist deutlich zu sehen, dass der IGV-Punkt, der den Knick bei 40% der durchgezogenen Linien darstellt, stark abfällt.

Der Dampfkessel des Dampfturbinenkreislaufs kann aber nur sehr kleine zeitliche Temperaturgradienten verkraften, so dass in diesem niedrigen Teillastbereich keine großen Lastgradienten des gesamten GuD-Kraftwerks möglich sind. Des Weiteren besteht die Forderung, dass eine kleine Parklast des GuD-Kraftwerks möglich sein sollte, bei dem das Kraftwerk in Bereitstellung läuft und möglichst schnell wieder anfahren kann. Allerdings ist ein schnelles Anfahren des GuD-Kraftwerks bei einer kalten Dampfturbine, also noch nicht einsatzfähigen Dampfturbine und Dampfkessel aufgrund der limitierten Temperaturgradienten, die es einzuhalten gilt, nicht möglich. Weiterhin steigen die CO-Emissionen aufgrund der kleinen Verbrennungstemperatur der Gasturbine und des infolgedessen kleineren Ausbrandes stark an, so dass ggf. kein konformer Betrieb möglich ist.

Es gibt Zusatzfeuerungsanlagen mit Brennern und ggf. Gebläsen, die direkt im Kessel des Dampfturbinenkreislaufs zufeuern. Theoretisch können diese zum Anwärmen genutzt werden. Bisher werden diese zur Leistungserhöhung bei Volllast genutzt. Bei tieferen Teillasten unterhalb des IGV-Punktes wird ein Absinken der Abgas- und somit auch der Dampftemperaturen in Kauf genommen. Dadurch waren bisher nur moderate Lastgradienten möglich. Der gesetzlich vorgegebene limitierte CO-Wert ist meist ausschlaggebend für den minimalen Lastpunkt.

Aufgabe der Erfindung ist es, ein GuD-Kraftwerk anzugeben, das bei einer geringen Parklast betrieben werden kann.

Gelöst wird diese Aufgabe durch eine Vorrichtung gemäß Anspruch 1 und eines Verfahrens gemäß Anspruch 7. In den Unteransprüchen sind vorteilhafte Weiterbildungen angegeben.

Die Aufgabe wird demnach gelöst durch eine Vorrichtung zum Erhöhen der Abgastemperatur einer Gasturbine, umfassend eine Gasturbine und einen Abhitzekessel, wobei ein Brenner zwischen der Gasturbine und dem Abhitzekessel angeordnet ist.

Somit werden erfindungsgemäß Brenner im Verbindungsbereich von Gasturbine und Abhitzekessel angebracht. Diese Verbindung ist als Rohr oder als Diffusorstück ausgeführt. Der erfindungsgemäße Vorteil liegt darin, dass diese Brenner dazu genutzt werden, um die Temperatur des Abgases der Gasturbine bei niedriger Teillast anzuheben. Dadurch ergibt sich ein kleinerer Temperaturgradient bei kleinen Teillasten unterhalb des IGV-Eckpunktes für den Dampfturbinenkreislauf und insbesondere den Dampfkessel. Die Abgas- oder auch die Dampftemperatur könnte dabei über die thermische Leistung des Brenners geregelt werden. Vorteilhaft wäre eine konstante Abgas- bzw. konstante Dampftemperatur.

Gelöst wird die Aufgabe demnach auch durch ein Verfahren zum Erhöhen der Abgastemperatur einer Gasturbine, wobei zwischen der Gasturbine und einem Abhitzekessel Brenner angeordnet werden.

Somit werden bei niedriger Teillast die Brenner eingesetzt, und zwar unterhalb des IGV-Eckpunktes der Gasturbine, um die Abgastemperatur warm zu halten. Die Lastgradienten und der CO-Ausbrand können in diesem Lastbereich erhöht werden. Ein Vorteil der Erfindung liegt darin, dass diese Lösung die Möglichkeit der Nachrüstung bestehender Gas- und Dampf-Kraftwerke darstellt.

Die Flexibilität des GuD-Kraftwerkes wird erhöht, da im niedrigen Teillastbereich größere Lastgradienten des GuD-Kraftwerks möglich sind.

Die niedrigste mögliche Teillast des GuD-Teilkraftwerks bei verbesserten Lastgradienten kann verringert werden. Die Flexibilität des GuD-Kraftwerks ist somit erhöht. Es kann eine sehr niedrige Parklast realisiert werden, dadurch ist die Zeit eines erneuten Anfahrens stark verringert. Ebenso wird die CO-Emission bei niedriger Teillast verringert.

In einer vorteilhaften Weiterbildung umfasst die Gasturbine einen Turbinenlagerstern mit einer Rippe, wobei der Brenner in der Rippe angeordnet ist.

Erfindungsgemäß wird in der Rippe eine Brennstoffzufuhr für den Brenner angeordnet. Ebenso sind erfindungsgemäß Lanzen oder Rechen auf den Turbinenlagerstern angeordnet. In einer alternativen Ausführungsform wird in einem Diffusorbereich, der zwischen der Gasturbine und der Dampfturbine liegt, der Brenner angeordnet. In einer weiteren vorteilhaften Weiterbildung sind die Brenner vor dem Abhitzekessel in einem Eingangsbereich angeordnet.

Die Erfindung wird im Folgenden anhand eines Ausführungsbeispiels näher erläutert. Die Figur zeigt in schematischer Weise:
- Figur 1: eine Querschnittansicht eines Teilbereichs einer Gasturbine.
Figur 1 zeigt eine Gasturbine 1, umfassend ein Turbinenteil 2, das aus Leitschaufeln 4 und Laufschaufeln 5 ausgebildet ist. Nicht dargestellt sind der Verdichter und die Brennkammer der Gasturbine 1. Ein heißes Gas- und Brennstoffgemisch kommt über einen Brennkammerweg 5 in einen Strömungskanal 6, der durch die Leitschaufeln 3 und Laufschaufeln 4 gebildet wird. Dieses Gas hat am Turbineneingang eine sehr hohe Temperatur, wobei am Turbinenausgang 7 die Temperatur aufgrund thermischer Umwandlungsprozesse reduziert ist. Am Turbinenausgang 7 strömt der erkaltete Gasstrom an einem Lagerstern 8 zu einem nicht näher dargestellten Abhitzekessel weiter.

Die Gasturbine 1 umfasst eine Vorrichtung zum Erhöhen einer Abgastemperatur, wobei ein Brenner 9 zwischen der Gasturbine 1 und dem nicht näher dargestellten Abhitzekessel angeordnet ist. Der Brenner 9 ist durch die Pfeile symbolisiert und wird in einer ersten Ausführungsform im Verbindungsbereich von Gasturbine 1 und Abhitzekessel angebracht. Diese Verbindung ist als Rohr- bzw. Diffusorstück ausgeführt. Die Brenner 9 können an verschiedenen Stellen und in verschiedenen Ausführungen zwischen Gasturbinenaustritt 7 und Kesseleintritt (nicht näher dargestellt) angebracht werden. So ist in einer ersten Ausführungsform der Brenner 9 in der Rippe 10 eines Turbinenlagersterns 8 angeordnet. Dabei kann der Brenner 9 in den Rippen 10 oder einer Abdeckkappe des Lagersterns 8 angeordnet werden. Der Vorteil hierbei ist, dass ein kleinerer Druckverlust entsteht. Die Brennstoffzufuhr wird durch die Rippen des Lagersterns 8 erfolgen. Dabei können Lanzen verwendet werden oder Rechen, auf denen die einzelnen Brenner 9 verteilt über Radius und Umfang angebracht werden.

In einer weiteren Ausführungsform werden die Brenner 9 im Diffusorbereich zwischen Gas- 1 und Dampfturbine angeordnet. Hier werden dann mehrere im Umfang verteilte Stopfen, Rechen oder Lanzen montiert, auf denen sich mehrere über den Radius verteilte Brenner 9 befinden.

In einer weiteren Ausführungsform werden die Brenner 9 direkt vor dem Kessel im Eingangsbereich des eintretenden Abgases angeordnet. Diese werden dann gezielt einzelne kritische Bauteile erwärmen oder warmhalten, um einen Temperaturgradienten zu vermeiden.

Dadurch lässt sich, wie in Figur 2 durch die gestrichelte Linie dargestellt, das GuD-Kraftwerk auch unterhalb des IGV-Punktes 11 betreiben.

## Patentansprüche

1. Verfahren zum Erhöhen der Abgastemperatur einer Gasturbine (1),
umfassend eine Gasturbine (1) und einen Abhitzekessel, **dadurch gekennzeichnet, dass**
ein Brenner (9) zwischen der Gasturbine (1) und dem Abhitzekessel angeordnet ist.

2. Vorrichtung nach Anspruch 1,
wobei die Gasturbine (1) einen Turbinenlagerstern (8) mit einer Rippe umfasst und der Brenner (9) in der Rippe angeordnet ist.

3. Vorrichtung nach Anspruch 2,
wobei in der Rippe eine Brennstoffzufuhr für den Brenner (9) angeordnet ist.

4. Vorrichtung nach Anspruch 2 oder 3,
wobei Lanzen oder Rechen auf dem Turbinenlagerstern (8) angeordnet sind.

5. Vorrichtung nach Anspruch 1,
mit einem Diffusorbereich zwischen der Gasturbine (1) und einer Dampfturbine,
wobei die Brenner (9) im Diffusorbereich angeordnet sind.

6. Vorrichtung nach Anspruch 1,
wobei vor dem Abhitzekessel in einem Eingangsbereich die Brenner (9) angeordnet sind.

7. Verfahren zum Erhöhen der Abgastemperatur einer Gasturbine (1),
wobei zwischen der Gasturbine (1) und einem Abhitzekessel Brenner angeordnet sind.

8. Verfahren nach Anspruch 7,
wobei die Brenner (9) gezündet werden bei einer Teillast von weniger als 40%.

9. Verfahren nach Anspruch 7 oder 8,
wobei die Abgastemperatur der Gasturbine (1) über die thermische Leistung des Brenners (9) geregelt wird.

10. Verfahren nach einem der Ansprüche 7 bis 9,
wobei der Brenner (9) bei Unterschreitung des IGV-Punktes gezündet wird.
